# FASCICULE DE BREVET EUROPEEN

(11) **EP 2 681 724 B1**
(45) Date de publication et mention de la délivrance du brevet: **07.02.2018**
(21) Numéro de dépôt: 12712309.9
(22) Date de dépôt: 01.03.2012
(51) Int. Cl.: G08G 1/056, G01S 19/01, G08G 1/0962

(54) **SYSTEME ET PROCEDE DE DETECTION D'UNE SITUATION DE CONTRESENS D'UN VEHICULE ET D'AVERTISSEMENT CORRESPONDANT**
VORRICHTUNG UND VERFARHREN ZUR DETEKTION EINER GEISTERFAHRERSITUATION, SOWIE ZUR ENTSPRECHENDEN WARNUNG
SYSTEM AND METHOD FOR DETECTING A GHOST DRIVING SITUATION AND FOR WARNING ACCORDINGLY

(30) Priorité: 04.03.2011 FR 1100655
(43) Date de publication de la demande: 08.01.2014
(73) Titulaire: Coyote System, 92150 Suresnes (FR)
(72) Inventeur: PIERLOT, Fabien, F-92150 Suresnes (FR); VAN LAETHEM, Jean-Marc, F-92150 Suresnes (FR)
(74) Mandataire: Louiset, Raphaël
(86) Numéro de dépôt international: PCT/FR2012/050434
(87) Numéro de publication internationale: WO 2012/120224

(56) Documents cités:
- EP-A1- 2 144 213
- EP-A2- 1 347 425
- EP-A2- 2 224 209
- DE-A1- 4 039 579
- DE-A1- 19 934 774
- FR-A1- 2 946 424

## Description

La présente invention concerne un système et un procédé de détection et d'avertissement de l'engagement à contresens sur une voie routière déterminée d'un véhicule automobile. Suivant l'invention, le système permet d'assurer non seulement la sécurité du conducteur d'un véhicule en situation de contresens, mais également celle des conducteurs des autres véhicules qui se trouvent en approche de celui-ci au même moment.

Parmi les causes d'accidents automobiles on relève ainsi diverses situations dans lesquelles des véhicules se trouvent engagés à contresens soit sur une route soit sur une autoroute, et ceci la plupart du temps en raison d'une faute d'inattention de leur conducteur. Le degré de gravité potentielle d'une telle situation dépend bien entendu du type de voie sur laquelle cet engagement à contresens se produit, mais également du fait que le conducteur a conscience ou non de la situation dans laquelle il se trouve.

A l'heure actuelle, les moyens les plus répandus destinés à empêcher une telle situation sont constitués de panneaux qui sont disposés à l'entrée des voies, et dont certains sont plus ou moins visibles des automobilistes.

On connaît également, sur certaines aires de repos d'autoroute, des radars aptes à détecter les véhicules quittant celle-ci et s'engageant à contresens sur l'autoroute. Il s'agit là cependant de matériels à la fois sophistiqués et onéreux qui nécessitent pour leur mise en oeuvre et leur maintenance de faire appel à du personnel spécialisé. Par ailleurs, pour que ces matériels soient réellement efficaces, il faudrait qu'ils puissent être disposés au niveau de toutes les entrées de toutes les autoroutes ce qui, à l'évidence, n'est pas envisageable en raison du coût important de l'opération.

Enfin, de tels dispositifs n'effectuent aucune intervention auprès des instances de régulation du trafic autoroutier en mesure de permettre à celles-ci d'intervenir auprès des autres usagers, afin de les avertir du danger potentiel représenté par le véhicule en situation de contresens.

On connaît par le brevet FR 2 946 424 un dispositif faisant appel à un système GPS qui permet de détecter le sens de déplacement d'un véhicule sur une voie de circulation et, par comparaison de ce sens de circulation avec le sens autorisé sur la voie, d'avertir le conducteur dans le cas où le sens de déplacement de son véhicule est erroné.

Les dispositifs de ce type, lorsqu'ils mettent en oeuvre des moyens de positionnement de type GPS, sont cependant soumis à des aléas qui sont, pour la plupart, liés à des fluctuations du niveau de précision du système, notamment dépendant du degré d'alignement de la constellation des satellites utilisés. Or, il est de fait que si l'on adresse plusieurs fois à un conducteur une alerte de contresens qui, à l'usage, s'avère erronée, la confiance de ce dernier en son système risque de se trouver amoindrie, ce qui est de nature à lui faire prendre des risques pour le futur.

Par ailleurs, ces dispositifs se contentent d'avertir le seul conducteur dont le véhicule se trouve en situation de contresens, et non les autres véhicules voisins pour lesquels il présente néanmoins un danger potentiel.

La présente invention a pour but d'éviter les fausses alertes de contresens diffusées aux conducteurs de véhicules, en n'alertant ces derniers sur la situation en contresens de leur véhicule qu'après avoir procédé à une vérification de l'information de contresens générée par le système.

La présente invention a également pour but d'améliorer la sécurité de la circulation de l'ensemble des véhicules se trouvant dans la zone du véhicule en situation de contresens.

Ainsi, le système suivant l'invention sera, d'une part, apte à intervenir auprès des instances de régulation du trafic de la voie concernée, notamment au niveau des autoroutes, afin de permettre à celles-ci de faire le nécessaire pour mettre en garde les autres usagers de cette voie contre le danger potentiel représenté par le véhicule en situation de contresens.

Le système suivant l'invention sera, d'autre part, apte à avertir directement des conducteurs de véhicules se trouvant dans le secteur concerné du danger encouru, et de moduler le niveau d'avertissement qui leur est envoyé, en fonction de leur proximité avec le véhicule en situation de contresens.

La présente invention a ainsi pour objet un système de détection et d'avertissement d'une situation de déplacement à contresens d'un véhicule sur un tronçon de voie routière, selon la revendication 1. D'autres caractéristiques de ce système, selon diverses réalisations, font l'objet des revendications dépendantes 2 à 7. La présente invention a également pour objet un procédé de détection et de signalisation d'une situation de déplacement à contresens d'un véhicule sur un tronçon de voie routière, selon la revendication 8. D'autres caractéristiques de ce procédé, selon diverses réalisations, font l'objet des revendications dépendantes 9 à 13. On décrira ci-après, à titre d'exemple non limitatif, des formes d'exécution de la présente invention, en référence au dessin annexé sur lequel :
- la figure 1 est une vue schématique d'un système de détection et d'avertissement d'une situation de déplacement à contresens d'un véhicule sur un tronçon de voie routière suivant l'invention,
- la figure 2 est un logigramme montrant les différentes étapes successives d'un exemple de mise en oeuvre du procédé suivant l'invention,
- la figure 3 est une variante du système suivant l'invention comprenant la mise en oeuvre d'un serveur distant.

Dans le présent mode de mise en oeuvre de l'invention, le système de détection **1** de contresens suivant l'invention est disposé de façon embarquée sur un véhicule.

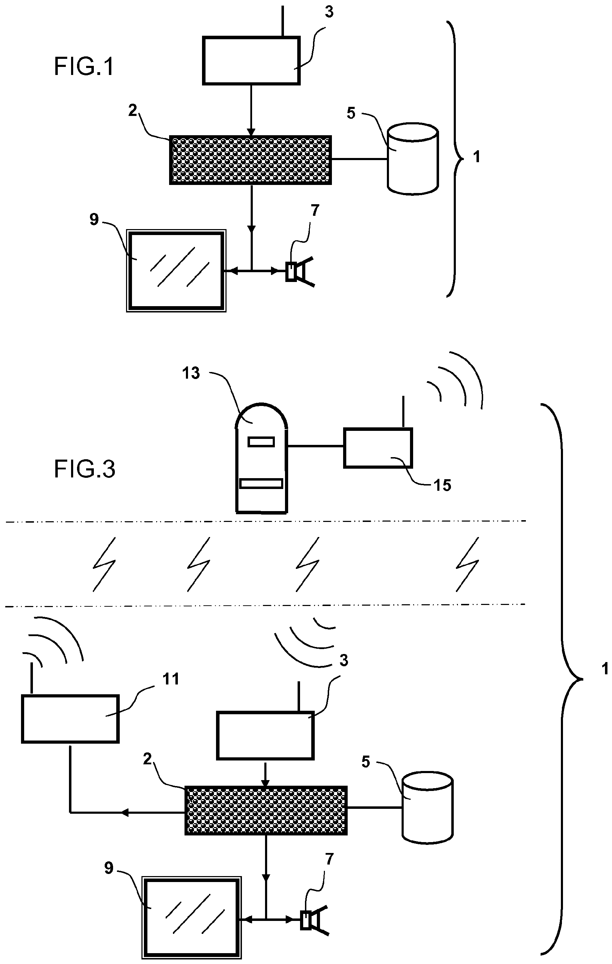

Ce système de détection **1** est constitué, ainsi que représenté sur la figure 1, d'un microcontrôleur **2** qui assure la gestion logique de différents éléments périphériques, à savoir de moyens de géolocalisation **3** de type GPS, d'une base de données cartographique **5** qui est stockée sur un support facilement et rapidement accessible et modifiable, tel que par exemple une mémoire flash, et qui contient la configuration des différents tronçons de routes et d'autoroutes qui composent un réseau routier, ainsi que la nature de chaque tronçon et le sens de circulation autorisé sur chacun de ceux-ci.

On entendra ci-après par « tronçon » une voie ou une partie de voie routière sur laquelle le sens de circulation est le même.

Le système de détection **1** comprend également une interface de communication lui permettant de fournir au conducteur du véhicule des informations et des conseils. Cette interface de communication peut être constituée d'un haut-parleur **7** pour une communication sonore et/ou par un afficheur **9** pour une communication visuelle.

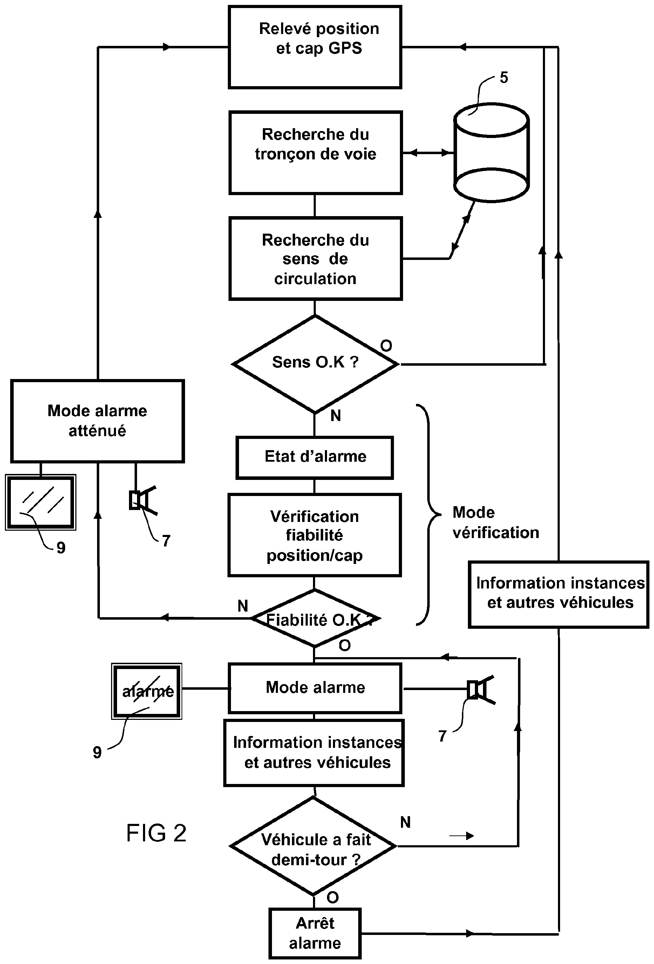

Ainsi que représenté sur le logigramme de la figure 2, lorsqu'un véhicule qui est pourvu d'un système de détection **1** suivant l'invention se déplace sur un tronçon de voie donnée, les moyens de géolocalisation **3** de type GPS adressent de façon périodique, et notamment par exemple toutes les secondes, au microcontrôleur **2** une trame d'informations de type GPS comprenant la localisation du véhicule, c'est-à-dire sa position exprimée en latitude et longitude, sa vitesse et son cap.

A réception de cette information de localisation, le microcontrôleur **2** accède alors à la base de données cartographique **5** et détermine le tronçon de voie sur lequel se trouve le véhicule.

Le système de détection **1** prend alors en compte le cap du véhicule fourni par la trame GPS et détermine son sens de circulation sur le tronçon de voie considéré et le compare avec le sens de circulation autorisé sur le même tronçon de voie qui lui est fourni par la base de données cartographique **5.** Si les deux sens de circulation sont identiques, cela signifie qu'aucune anomalie quant au sens de circulation n'est détectée et que le véhicule se déplace bien dans le bon sens de circulation. Le système de détection **1** continue alors ses relevés.

Si, par contre, le sens de circulation sur le terrain vient à être différent de celui provenant de la base de données cartographique **5,** cela implique que le véhicule se déplace à contresens sur le tronçon de voie considéré, et le système de détection **1** passe alors dans un mode dit "état d'alarme".

Suivant l'invention, le système de détection **1** embarqué, avant de passer en "mode alarme" qui est le mode dans lequel on alertera le conducteur, met en oeuvre une procédure de vérification de la fiabilité des informations de position et de cap communiquées par les moyens de géolocalisation **3** de type GPS dans sa trame d'informations, dite "mode vérification".

Cette procédure sera d'autant plus nécessaire que le signal GPS des moyens de géolocalisation **3** sera dégradé. En effet, on sait que les trames de signaux communiqués par les systèmes GPS comprennent des signaux qui sont représentatifs du degré d'alignement des satellites et donc de la qualité du signal GPS fourni.

Dans le "mode vérification", le système de détection **1** embarqué commence par contrôler la fiabilité du signal GPS par la vérification, d'une part, du nombre de satellites ayant contribué à l'établissement des derniers relevés et, d'autre part, par la position de ces derniers. On sait en effet que pour obtenir une mesure fiable, le nombre de satellites doit être supérieur à quatre, et on sait également que ces satellites doivent être suffisamment écartés les uns des autres (paramètre GDOP). Si la fiabilité du signal GPS n'est pas bonne, le système de détection **1** met en oeuvre différents tests afin de confirmer ou infirmer la situation d'alerte.

Par exemple, le système de détection **1** détermine pour un nombre n de positions données successives du véhicule, (par exemple trois positions) le cap moyen de celui-ci, et le compare au cap du tronçon de voie considéré issu de la base de données cartographiques **5.**

Si l'écart angulaire de ces deux valeurs de cap s'avère être supérieur à une limite angulaire déterminée δα, par exemple 10°, alors cela signifie que l'on n'est pas sûr des données GPS et donc que l'on n'est pas sûr que le véhicule roule bien à contresens. Dans ces conditions, le message qui est adressé alors par le système de détection **1** au conducteur est un message dit « atténué », en ce sens que son caractère est une simple mise en garde. Ce message pourra ainsi être du type: « Attention il y a un risque que votre véhicule roule à contresens ».

En tout état de cause, le système de détection **1** continue son cycle de fonctionnement, de sorte que, si la qualité du signal GPS s'améliore par la suite, ce message se trouvera infirmé et ne sera plus émis.

Si la fiabilité est reconnue comme bonne, le système de détection **1** embarqué passe alors en mode dit "mode alarme" et c'est alors qu'il délivre au conducteur, par l'intermédiaire de ses interfaces de communication **7** et/ou **9,** un message d'avertissement qui pourra être préférentiellement à la fois sonore et visuel et par exemple du type: « Attention votre véhicule roule actuellement à contresens ».

Ce message, suivant l'invention, pourra tenir compte de la situation particulière dans laquelle le véhicule de l'utilisateur se trouve à contresens. Ainsi, si l'utilisateur se trouve dans une rue en ville, le message pourra lui conseiller de mettre ses « warning » et de faire marche arrière, alors que s'il se trouve sur une autoroute, le message lui conseillera de se ranger sur le bas-côté et d'appeler les services de dépannage. Le message pourra à cet effet lui donner les coordonnées téléphoniques du service compétent qu'il doit contacter.

Dans un autre mode de mise en oeuvre de la présente invention, le système de détection **1** met en oeuvre des moyens aptes à améliorer la sécurité des autres véhicules se trouvant dans le même secteur au même moment, et tout particulièrement des véhicules qui se dirigent vers le tronçon de voie où se trouve le véhicule à contresens ou qui se trouvent déjà sur celui-ci.

Dans un tel mode de mise en oeuvre de l'invention, le système de détection **1** possède des moyens de communication **11,** via un réseau de communication à distance tel que notamment un réseau GPRS, lui permettant d'envoyer un signal d'avertissement, par exemple un signal préenregistré, directement aux instances de régulation du trafic gérant le tronçon de voie concerné et/ou aux autres véhicules.

Le système de détection **1** permet ainsi d'alerter les services de gestion des autoroutes et/ou des routes, en les avertissant qu'un véhicule se trouve à contresens sur tel tronçon de voie déterminée, permettant ainsi à ces derniers de prévoir tout système d'alerte appropriée à destination des véhicules s'engageant sur cette voie.

Dans un autre mode de mise en oeuvre de la présente invention, représenté sur la figure 3, les moyens de communication **11** embarqués sur le véhicule seront aptes, dès que le système de détection **1** se trouve en "état d'alarme" et que celui-ci est vérifié, à entrer en communication avec un serveur distant **13** équipé de moyens d'émission/réception **15** et à communiquer à celui-ci la position du véhicule en situation de contresens, la voie et le tronçon de voie sur laquelle il se trouve, la direction de son déplacement ainsi que sa vitesse. C'est à partir du serveur distant **13** que seront alors envoyés plusieurs types de messages d'avertissement, notamment à destination des services de gestion des autoroutes qui, ainsi que précédemment, seront aptes à les répercuter aux automobilistes.

Par ailleurs, on connaît des systèmes de sécurité et d'assistance à la conduite qui équipent certains véhicules qui comportent des moyens embarqués sur ce dernier et qui permettent à leur conducteur d'être en communication permanente avec un serveur distant auquel il communique en permanence sa position, ce dernier étant alors en mesure de l'informer des multiples perturbations qu'il est susceptible de rencontrer sur la voie, voire même sur le tronçon de voie sur lequel il se trouve.

Dans le présent mode de mise en oeuvre de l'invention, lorsqu'une situation de circulation à contresens est détectée et vérifiée, le système de détection **1** embarqué communique l'information au serveur distant **13.** Ce dernier détermine alors les véhicules qui sont sur la même voie ou sur une voie proche et qui se dirigent vers le véhicule en situation de contresens, et envoie à ces derniers une alerte ainsi qu'éventuellement les conseils de sécurité adaptés à la situation.

Dans un mode de mise en oeuvre de l'invention, lorsque le serveur distant **13** détecte un véhicule qui, bien que se déplaçant sur une voie ou un tronçon de voie dans un sens correct, se dirige cependant vers une autoroute sur laquelle il se trouvera à contresens, il passe alors en état d'alarme avec un message d'information de la situation du type : « Attention vous allez vous engager à contresens sur l'autoroute ».

Le système de détection **1** embarqué vérifie, par le relevé de la trame fournie par ses moyens de géolocalisation **3** de type GPS, si le véhicule a fait ou non demi-tour et, si tel n'est pas le cas, il continue à lui délivrer son message d'avertissement.

Lorsque le système de détection **1** embarqué constate que le véhicule concerné a fait demi-tour, il arrête de délivrer à celui-ci son message d'avertissement et avertit, directement par le réseau GPRS et/ou via le serveur, les instances de gestion des autoroutes qu'il a précédemment alertées, ainsi que les autres automobilistes, que la situation du véhicule à contresens est terminée.

Le système de détection **1** embarqué continue ensuite sa surveillance jusqu'à la prochaine alerte.

## Revendications

1. Système de détection (**1**) et d'avertissement d'une situation de déplacement à contresens d'un véhicule sur un tronçon de voie routière, comportant :
- des moyens de géolocalisation (**3**) de type GPS aptes, de façon périodique, à fournir à partir d'un signal GPS, à des moyens de calcul (**2**) la position et le cap du véhicule dans une trame d'information,
- une base de données cartographique (**5**) des tronçons de voie d'un réseau routier, et des sens de déplacement autorisés sur ces tronçons,
- lesdits moyens de calcul (**2**) aptes, à partir de la base de données cartographique (**5**) et de la susdite position et du susdit cap du véhicule à établir respectivement le tronçon de voie et le sens de déplacement du véhicule sur celui-ci, et à générer un état d'alarme, lorsque ledit sens de déplacement n'est pas le sens de déplacement autorisé sur ce tronçon,
- des moyens avertisseurs (**7**,**9**), embarqués à bord du véhicule, aptes à émettre à l'attention du conducteur de celui-ci un message d'avertissement, après qu'un état d'alarme ait été établi, **caractérisé en ce qu'**il comporte des moyens vérificateurs aptes, lorsqu'un état d'alarme est établi, à procéder à une vérification de sa fiabilité, avant que l'état d'alarme généré ne soit communiqué aux moyens avertisseurs (**7**,**9**, les moyens vérificateurs, dans le but de vérifier l'état d'alarme, comprennent des moyens aptes :
- à estimer la fiabilité du signal GPS en fonction de critères prédéfinis,
- lorsque le signal GPS est estimé comme non-fiable, à déterminer le cap moyen du véhicule établi sur au moins deux valeurs successives de cap en provenance de la trame d'information, à comparer ce cap moyen avec le cap du tronçon tel que stocké dans la base de donnée cartographique (**5**), et à déterminer l'écart entre ces deux valeurs.

2. Système de détection (**1**) et d'avertissement suivant la revendication 1, **caractérisé en ce que** les moyens avertisseurs (**7**, **9**), comprennent des moyens aptes :
- lorsque le signal GPS est estimé comme fiable, à avertir le conducteur via le message d'avertissement que le véhicule se trouve dans une situation de contresens,
- lorsque le signal GPS est estimé comme non-fiable et lorsque ledit écart est supérieur à une valeur déterminée (δα) dite valeur de seuil, à avertir le conducteur via le message d'avertissement que son véhicule risque de se trouver dans une situation de contresens.

3. Système de détection (**1**) et d'avertissement suivant l'une des revendications précédentes, **caractérisé en ce qu'**il comprend un serveur distant (**13**), apte à communiquer avec le véhicule par l'intermédiaire de moyens de communication (**11**) embarqués à bord de celui-ci.

4. Système de détection (**1**) et d'avertissement suivant la revendication 3, **caractérisé en ce qu'**il comporte des moyens (**11**) aptes à permettre au conducteur de confirmer ou d'infirmer à un serveur distant (**13**) le message d'avertissement reçu.

5. Système de détection (**1**) et d'avertissement suivant l'une des revendications 3 ou 4, **caractérisé en ce que** le serveur distant (**13**) comporte des moyens aptes à communiquer aux véhicules dudit tronçon et/ou aux véhicules en approche de celui-ci, et/ou aux instances de gestion routières, un avertissement de la présence d'un véhicule en situation de contresens sur ce tronçon.

6. Système de détection (**1**) et d'avertissement suivant l'une des revendications 3 à 5, **caractérisé en ce que** le véhicule comporte des moyens aptes, de façon périodique, lorsqu'un état d'alarme est établi et vérifié, à enregistrer sa trame d'information et à la communiquer au serveur distant (**13**).

7. Système de détection (**1**) et d'avertissement suivant l'une des revendications 3 à 6, **caractérisé en ce que** le véhicule comporte des moyens (**11**) aptes, lorsqu'un état d'alarme est établi et vérifié, à émettre une information de mise en garde directement aux véhicules proches et/ou au serveur distant.

8. Procédé de détection et de signalisation d'une situation de déplacement à contresens d'un véhicule sur un tronçon de voie routière, comportant les étapes consistant à :
- déterminer de façon périodique, par réception d'une trame d'information établie à partir d'un signal GPS, la position du véhicule et la valeur de son cap,
- déterminer, par comparaison de cette position avec une base de données cartographique (**5**), le tronçon de voie sur lequel le véhicule se déplace,
- déterminer par comparaison du cap du véhicule avec ladite base de données cartographique (**5**) le sens de déplacement du véhicule sur ledit tronçon,
- générer un état d'alarme lorsque le sens de déplacement du véhicule ainsi déterminé n'est pas le sens de déplacement autorisé dans la base de données cartographique (**5**),
- émettre à l'attention du conducteur du véhicule un message d'avertissement après qu'un état d'alarme ait été établi, **caractérisé en ce que**, lorsqu'un état d'alarme est établi, on met en oeuvre une phase de vérification de la fiabilité de celui-ci précédant l'étape d'émission du message d'avertissement à l'attention du conducteur, dans le but de vérifier l'état d'alarme la phase de vérification comprend les étapes consistant à
- estimer la fiabilité du signal GPS en fonction de critères prédéfinis,
- lorsque le signal GPS est estimé comme non-fiable,
∘ déterminer le cap moyen du véhicule établi sur au moins deux valeurs successives de cap en provenance de la trame de type GPS,
∘ comparer ce cap moyen avec le cap du tronçon tel que stocké dans la base de donnée cartographique (**5**),
∘ déterminer l'écart entre ces deux valeurs.

9. Procédé de détection et de signalisation suivant la revendication 8, **caractérisé en ce que** l'étape d'émission du message d'avertissement comprend les étapes consistant à
- lorsque le signal GPS est estimé comme fiable, avertir le conducteur via le message d'avertissement que le véhicule se trouve dans une situation de contresens,
- lorsque le signal GPS est estimé comme non-fiable et lorsque ledit écart est supérieur à une valeur déterminée (δα) dite valeur de seuil, à avertir le conducteur via le message d'avertissement que son véhicule risque de se trouver dans une situation de contresens.

10. Procédé de détection et de signalisation suivant la revendication 9, **caractérisé en ce que**, lorsqu'un état d'alarme est établi et vérifié, un système de détection (**1**) embarqué du véhicule concerné communique à un serveur distant (**13**) une information de cette situation de contresens ainsi que sa trame de type GPS.

11. Procédé de détection et de signalisation suivant la revendication 10, **caractérisé en ce que**, à réception de ces informations, le serveur distant (**13**) communique aux instances de régulation du trafic gérant le tronçon de voie concerné et/ou aux véhicules situés sur le tronçon du véhicule concerné et/ou en approche de celui-ci, un avertissement de la présence d'un véhicule en situation de contresens sur ledit tronçon.

12. Procédé de détection et de signalisation suivant l'une des revendications 10 ou 11, **caractérisé en ce que** le système de détection (**1**) embarqué d'un véhicule dont un état d'alarme a été établi et vérifié enregistre et communique, de façon périodique, sa trame d'information au serveur distant (**13**) qui, tant que perdure cette situation de contresens, envoie aux instances de régulation du trafic gérant le tronçon de voie concerné et/ou aux autres véhicules situés sur ce tronçon et/ou en approche de celui-ci, une confirmation de la présence en contresens dudit véhicule.

13. Procédé de détection et de signalisation suivant l'une des revendications 8 à 12, **caractérisé en ce que**, lorsqu'un état d'alarme est établi et vérifié, un système embarqué (**1**) demande au conducteur de confirmer ou d'infirmer la situation de contresens du véhicule et ne met en oeuvre les étapes ultérieures qu'après confirmation par celui-ci de sa situation de contresens.

## Patentansprüche

1. System zur Detektion (1) von und zur Warnung vor einer Geisterfahrersituation eines Fahrzeugs auf einem Abschnitt einer Fahrbahn, umfassend:
- Mittel zur GPS-Geolokalisierung (3), die in der Lage sind, die Position und den Kurs des Fahrzeugs in einem Informationsrahmen anhand eines GPS-Signals periodisch an Rechenmittel (2) zu liefern,
- eine kartographische Datenbank (5) der Fahrbahnabschnitte eines Straßennetzes und der erlaubten Fortbewegungsrichtungen auf diesen Abschnitten,
- wobei die Rechenmittel (2) in der Lage sind, anhand der kartographischen Datenbank (5) und der oben genannten Position und des oben genannten Kurses des Fahrzeugs den Fahrbahnabschnitt und die Fortbewegungsrichtung des Fahrzeugs auf demselben zu ermitteln, und einen Alarmzustand zu erzeugen, wenn die Fortbewegungsrichtung nicht die erlaubte Fortbewegungsrichtung auf diesem Abschnitt ist,
- Warnmittel (7, 9) an Bord des Fahrzeugs, die in der Lage sind, eine Warnmeldung an den Fahrer desselben zu senden, nachdem ein Alarmzustand ermittelt wurde, **dadurch gekennzeichnet, dass** es Überprüfungsmittel umfasst, die in der Lage sind, wenn ein Alarmzustand ermittelt ist, eine Überprüfung seiner Zuverlässigkeit vorzunehmen, bevor der erzeugte Alarmzustand an die Warnmittel (7, 9) übermittelt wird, die Überprüfungsmittel umfassen, um den Alarmzustand zu überprüfen, Mittel, die in der Lage sind:
- die Zuverlässigkeit des GPS-Signals in Abhängigkeit von vorgegebenen Kriterien einzuschätzen,
- wenn das GPS-Signal als unzuverlässig eingeschätzt ist, den mittleren Kurs des Fahrzeugs zu bestimmen, der anhand von mindestens zwei aufeinanderfolgenden Kurswerten aus dem Informationsrahmen ermittelt ist, diesen mittleren Kurs mit dem Kurs des Abschnitts zu vergleichen, wie er in der kartographischen Datenbank (5) gespeichert ist, und die Abweichung zwischen diesen beiden Werten zu bestimmen.

2. System zur Detektion (1) und zur Warnung nach Anspruch 1, **dadurch gekennzeichnet, dass** die Warnmittel (7, 9) Mittel enthalten, die in der Lage sind:
- wenn das GPS-Signal als zuverlässig eingeschätzt ist, den Fahrer über die Warnmeldung zu warnen, dass sich das Fahrzeug in einer Geisterfahrersituation befindet,
- wenn das GPS-Signal als unzuverlässig eingeschätzt ist und wenn die Abweichung größer als ein vorbestimmter Wert (δα), Schwellenwert genannt, ist, den Fahrer über die Warnmeldung zu warnen, dass sich sein Fahrzeug möglicherweise in einer Geisterfahrersituation befindet.

3. System zur Detektion (1) und zur Warnung nach einem der vorhergehenden Ansprüche, **dadurch gekennzeichnet, dass** es einen entfernten Server (13) umfasst, der in der Lage ist, mit dem Fahrzeug mithilfe von Kommunikationsmitteln (11) zu kommunizieren, die sich an Bord desselben befinden.

4. System zur Detektion (1) und zur Warnung nach Anspruch 3, **dadurch gekennzeichnet, dass** es Mittel (11) umfasst, die in der Lage sind, dem Fahrer zu erlauben, die empfangene Warnmeldung einem entfernten Server (13) zu bestätigen oder aufzuheben.

5. System zur Detektion (1) und zur Warnung nach einem der Ansprüche 3 oder 4, **dadurch gekennzeichnet, dass** der entfernte Server (13) Mittel umfasst, die in der Lage sind, den Fahrzeugen des Abschnitts und/oder den Fahrzeugen, die sich diesem annähern, und/oder den Verkehrsleitstellen eine Warnung vor dem Vorhandensein eines Fahrzeugs in einer Geisterfahrersituation auf diesem Abschnitt zu übermitteln.

6. System zur Detektion (1) und zur Warnung nach einem der Ansprüche 3 bis 5, **dadurch gekennzeichnet, dass** das Fahrzeug Mittel umfasst, die in der Lage sind, periodisch dessen Informationsrahmen zu speichern und ihn dem entfernten Server (13) zu übermitteln, wenn ein Alarmzustand ermittelt und überprüft ist.

7. System zur Detektion (1) und zur Warnung nach einem der Ansprüche 3 bis 6, **dadurch gekennzeichnet, dass** das Fahrzeug Mittel (11) umfasst, die in Lage sind, eine Warninformation direkt an die Fahrzeuge in der Nähe und/oder den entfernten Server zu senden, wenn ein Alarmzustand ermittelt und überprüft ist.

8. Verfahren zur Detektion und Meldung einer Geisterfahrersituation eines Fahrzeugs auf einem Abschnitt einer Fahrbahn, umfassend die Schritte, die aus Folgendem bestehen:
- periodisches Bestimmen, durch den Empfang eines Informationsrahmens, der anhand eines GPS-Signals ermittelt wurde, der Position des Fahrzeugs und des Wertes seines Kurses,
- Bestimmen, durch einen Vergleich dieser Position mit einer kartographischen Datenbank (5), des Fahrbahnabschnitts, auf dem sich das Fahrzeug fortbewegt,
- Bestimmen, durch einen Vergleich des Kurses des Fahrzeugs mit der kartographischen Datenbank (5), der Fortbewegungsrichtung des Fahrzeugs auf dem Fahrbahnabschnitt,
- Erzeugen eines Alarmzustands, wenn die so bestimmte Fortbewegungsrichtung des Fahrzeugs nicht die erlaubte Fortbewegungsrichtung in der kartographischen Datenbank (5) ist,
- Senden einer Warnmeldung an den Fahrer des Fahrzeugs, nachdem ein Alarmzustand ermittelt wurde, **dadurch gekennzeichnet, dass**, wenn ein Alarmzustand ermittelt ist, eine Phase der Überprüfung der Zuverlässigkeit desselben umgesetzt wird, die der Phase des Sendens der Warnmeldung an den Fahrer vorausgeht, um den Alarmzustand zu überprüfen umfasst die Überprüfungsphase die Schritte, die aus Folgendem bestehen:
- Einschätzen der Zuverlässigkeit des GPS-Signals in Abhängigkeit von vorgegebenen Kriterien,
- wenn das GPS-Signal als unzuverlässig eingeschätzt ist,
o Bestimmen des mittleren Kurses des Fahrzeugs, der anhand von mindestens zwei aufeinanderfolgenden Kurswerten aus dem GPS-Rahmen ermittelt ist,
o Vergleichen dieses mittleren Kurses mit dem Kurs des Abschnitts, wie er in der kartographischen Datenbank (5) gespeichert ist,
o Bestimmen der Abweichung zwischen diesen zwei Werten.

9. Verfahren zur Detektion und Meldung nach Anspruch 8, **dadurch gekennzeichnet, dass** der Schritt des Sendens der Warnmeldung die Schritte umfasst, die aus Folgendem bestehen:
- wenn das GPS-Signal als zuverlässig eingeschätzt ist, Warnen des Fahrers über die Warnmeldung, dass sich das Fahrzeug in einer Geisterfahrersituation befindet,
- wenn das GPS-Signal als unzuverlässig eingeschätzt ist und wenn die Abweichung größer als ein vorbestimmter Wert (δα), Schwellenwert genannt, ist, Warnen des Fahrers über die Warnmeldung, dass sich sein Fahrzeug möglicherweise in einer Geisterfahrersituation befindet.

10. Verfahren zur Detektion und Meldung nach Anspruch 9, **dadurch gekennzeichnet, dass**, wenn ein Alarmzustand ermittelt und überprüft ist, ein bordeigenes System zur Detektion (1) des betroffenen Fahrzeugs einem entfernten Server (13) eine Information über diese Geisterfahrersituation sowie seinen GPS-Rahmen übermittelt.

11. Verfahren zur Detektion und Meldung nach Anspruch 10, **dadurch gekennzeichnet, dass** bei Empfang dieser Informationen der entfernte Server (13) den Verkehrsregelstellen, die den betroffenen Fahrbahnabschnitt leiten, und/oder den Fahrzeugen, die sich auf dem Fahrbahnabschnitt des betroffenen Fahrzeugs befinden und/oder sich diesem nähern, eine Warnung vor dem Vorhandensein eines Fahrzeugs in einer Geisterfahrersituation auf dem Abschnitt übermittelt.

12. Verfahren zur Detektion und Meldung nach einem der Ansprüche 10 oder 11, **dadurch gekennzeichnet, dass** das bordeigene System zur Detektion (1) eines Fahrzeugs, bei dem ein Alarmzustand ermittelt und überprüft wurde, seinen Informationsrahmen periodisch speichert und dem entfernten Server (13) übermittelt, der den Verkehrsregelstellen, die den betroffenen Fahrbahnabschnitt leiten, und/oder den anderen Fahrzeugen, die sich auf diesem Fahrbahnabschnitt befinden und/oder sich diesem nähern, eine Bestätigung des Vorhandenseins des Fahrzeugs in Gegenrichtung übermittelt, solange die Geisterfahrersituation andauert.

13. Verfahren zur Detektion und Meldung nach einem der Ansprüche 8 bis 12, **dadurch gekennzeichnet, dass**, wenn ein Alarmzustand ermittelt und überprüft ist, ein bordeigenes System (1) den Fahrer bittet, die Geisterfahrersituation zu bestätigen oder aufzuheben, und die späteren Schritte nur nach Bestätigung seiner Geisterfahrersituation durch denselben durchführt.

## Claims

1. System for detection (1) and warning of a situation of a vehicle travelling in the wrong direction on a roadway segment, comprising:
- geolocation means (3) of GPS type able, in a periodic manner, to provide on the basis of a GPS signal, to calculation means (2) the position and the heading of the vehicle in an information frame,
- a cartographic database (5) of the roadway segments of a road network, and of the directions of travel permitted on these segments,
- said calculation means (2) able, on the basis of the cartographic database (5) and of the abovementioned position and of the abovementioned heading of the vehicle to establish respectively the roadway segment and the direction of travel of the vehicle on the latter, and to generate an alarm state, when said direction of travel is not the direction of travel permitted on this segment,
- warning means (7, 9), embedded on board the vehicle, able to emit for the attention of the driver of the vehicle a warning message, after an alarm state has been established, **characterized in that** it comprises verifier means able, when an alarm state is established, to undertake a verification of its reliability, before the alarm state generated is communicated to the warning means (7, 9), the verifier means, with the aim of verifying the alarm state, comprise means able:
- to estimate the reliability of the GPS signal as a function of predefined criteria,
- when the GPS signal is estimated as non-reliable, to determine the mean heading of the vehicle established over at least two successive values of heading originating from the information frame, to compare this mean heading with the heading of the segment as stored in the cartographic database (5), and to determine the discrepancy between these two values.

2. System for detection (1) and warning according to Claim 1, **characterized in that** the warning means (7, 9) comprise means able:
- when the GPS signal is estimated as reliable, to warn the driver via the warning message that the vehicle is in a situation of travelling in the wrong direction,
- when the GPS signal is estimated as non-reliable and when the said discrepancy is greater than a determined value (δα) termed the threshold value, to warn the driver via the warning message that his vehicle risks being in a situation of travelling in the wrong direction.

3. System for detection (1) and warning according to the preceding claims, **characterized in that** it comprises a remote server (13), able to communicate with the vehicle by way of communication means (11) embedded on board the vehicle.

4. System for detection (1) and warning according to Claim 3, **characterized in that** it comprises means (11) able to allow the driver to confirm or to deny to a remote server (13) the warning message received.

5. System for detection (1) and warning according to one of Claims 3 or 4, **characterized in that** the remote server (13) comprises means able to communicate to the vehicles of said segment and/or to the vehicles approaching said segment, and/or to the road management authorities, a warning of the presence of a vehicle in a situation of travelling in the wrong direction on this segment.

6. System for detection (1) and warning according to one of Claims 3 to 5, **characterized in that** the vehicle comprises means able, in a periodic manner, when an alarm state is established and verified, to record its information frame and to communicate it to the remote server (13).

7. System for detection (1) and warning according to one of Claims 3 to 6, **characterized in that** the vehicle comprises means (11) able, when an alarm state is established and verified, to emit an item of information regarding caution directly to the nearby vehicles and/or to the remote server.

8. Method of detecting and signalling a situation of a vehicle travelling in the wrong direction on a roadway segment, comprising the steps consisting in:
- determining in a periodic manner, by receiving an information frame established on the basis of a GPS signal, the position of the vehicle and the value of its heading,
- determining, by comparing this position with a cartographic database (5), the roadway segment on which the vehicle is travelling,
- determining by comparing the heading of the vehicle with said cartographic database (5) the direction of travel of the vehicle on said segment,
- generating an alarm state when the direction of travel of the vehicle thus determined is not the direction of travel permitted in the cartographic database (5),
- emitting for the attention of the driver of the vehicle a warning message after an alarm state has been established, **characterized in that**, when an alarm state is established, one implements a phase of verification of the reliability of the latter preceding the step of emitting the warning message for the attention of the driver, with the aim of verifying the alarm state the verification phase comprises the steps consisting in
- estimating the reliability of the GPS signal as a function of predefined criteria,
- when the GPS signal is estimated as non-reliable,
o determining the mean heading of the vehicle established over at least two successive values of heading originating from the frame of GPS type,
o comparing this mean heading with the heading of the segment as stored in the cartographic database (5),
o determining the discrepancy between these two values.

9. Method of detecting and signalling according to Claim 8, **characterized in that** the step of emitting the warning message comprises the steps consisting in
- when the GPS signal is estimated as reliable, warning the driver via the warning message that the vehicle is in a situation of travelling in the wrong direction,
- when the GPS signal is estimated as non-reliable and when said discrepancy is greater than a determined value (δα) termed the threshold value, in warning the driver via the warning message that his vehicle risks being in a situation of travelling in the wrong direction.

10. Method of detecting and signalling according to Claim 9, **characterized in that**, when an alarm state is established and verified, a detection system (1) embedded on board the vehicle concerned communicates to a remote server (13) an item of information regarding this situation of travelling in the wrong direction as well as its frame of GPS type.

11. Method of detecting and signalling according to Claim 10, **characterized in that**, on receiving these items of information, the remote server (13) communicates to the traffic regulating authorities managing the segment of roadway concerned and/or to the vehicles situated on the segment of the vehicle concerned and/or approaching the latter, a warning of the presence of a vehicle in a situation of travelling in the wrong direction on said segment.

12. Method of detecting and signalling according to one of Claims 10 or 11, **characterized in that** the detection system (1) embedded on board a vehicle whose alarm state has been established and verified records and communicates, in a periodic manner, its information frame to the remote server (13) which, for as long as this situation of travelling in the wrong direction persists, dispatches to the traffic regulating authorities managing the segment of roadway concerned and/or to the other vehicles situated on this segment and/or approaching the latter, a confirmation of the presence of said vehicle travelling in the wrong direction.

13. Method of detecting and signalling according to one of Claims 8 to 12, **characterized in that**, when an alarm state is established and verified, an embedded system (1) requests the driver to confirm or deny the situation of the vehicle travelling in the wrong direction and implements the subsequent steps only after confirmation therefrom of his situation of travelling in the wrong direction.
